# EUROPÄISCHE PATENTANMELDUNG

(11) **EP 3 730 720 A2**
(43) Veröffentlichungstag der Anmeldung: **28.10.2020**
(21) Anmeldenummer: 20170992.0
(22) Anmeldetag: 23.04.2020
(51) Int. Cl.: E04F 15/12

(54) **HERSTELLVERFAHREN ZUM HERSTELLEN EINES BESCHICHTUNGSMATERIALS, ZWISCHENMISCHMATERIAL, BESCHICHTUNGSMATERIAL SOWIE EIN SANIERUNGSVERFAHREN ZUM SANIEREN EINES FUSSBODENS MIT EINEM BESCHICHTUNGSMATERIAL**

(30) Priorität: 25.04.2019 DE 102019205951
(71) Anmelder: Karakas, Hüseyin, 70771 Leinfelden-Echterdingen (DE)
(72) Erfinder: Karakas, Hüseyin, 70771 Leinfelden-Echterdingen (DE)
(74) Vertreter: BRP Renaud & Partner mbB Rechtsanwälte Patentanwälte Steuerberater

(57) **Zusammenfassung**

Die vorliegende Erfindung betrifft ein Herstellverfahren (2) zum Herstellen eines Zwischenmischmaterials (8) und eines Beschichtungsmaterials (1) zur Verwendung in einem Sanierungsverfahren (11), eine Zusammensetzung des Zwischenmischmaterials (8), eine Zusammensetzung des Beschichtungsmaterials (1) zur Verwendung in einem Sanierungsverfahren (11), eine Haft-Grundierung (13) sowie ein Sanierungsverfahren (11) zum Sanieren einer Fußboden-Oberfläche (10a) eines Fußbodens (10), umfassend eine zu sanierende Fußboden-Oberfläche (10a) und ein Beschichtungsmaterial (1).

## Beschreibung

Die vorliegende Erfindung betrifft ein Herstellverfahren zum Herstellen eines Beschichtungsmaterials. Die Erfindung betrifft ferner ein Zwischenmischmaterial und ein Beschichtungsmaterial, die jeweils gemäß dem Herstellverfahren zum Herstellen eines Beschichtungsmaterials hergestellt sein können. Darüber hinaus ist die vorliegende Erfindung auf ein Sanierungsverfahren zum Sanieren eines Fußbodens mit einem solchen Beschichtungsmaterial gerichtet.

Sanierungsverfahren für elastische und nicht elastische Fußböden, wie PVC-Fußböden (Polyvinylchlorid-Fußböden), CV-Fußböden (cushioned vinyl-Fußböden), Epoxidfußböden, Linoleum-Fußböden, Fliesenböden, Steinfußböden, Betonfußböden, Estrichböden sowie Herstellverfahren für Beschichtungsmaterialien für derartige Sanierungsverfahren sind seit langem bekannt.

Derartige Fußböden erfahren im Rahmen ihrer vorhergesehenen üblichen Nutzung eine starke Belastung, beispielsweise durch das Befahren von Industriefußböden mit großen Lasten oder durch relativ häufiges Begehen bei stark frequentierten öffentlich oder gewerblich genutzte Fußböden.

Daraus resultiert eine relativ hohe Beanspruchung, die eine gewisse Abnutzung und/oder Beschädigung der Fußböden unvermeidlich macht. Im Laufe der Zeit bilden sich an den Fußböden beispielsweise kleinere Schäden, Verfärbungen oder auch Risse, wodurch die optischen und haptischen Eigenschaften der betreffenden Fußböden verschlechtert sind.

Um derartige Schäden oder auch Alterserscheinungen von dann als Altfußböden bezeichneten Fußböden zu sanieren, ist es üblich, standardisierte Sanierungsverfahren einzusetzen.

Im Rahmen dieser standardisierten Sanierungsverfahren ist eine Vorbehandlung der Altfußböden nötig, nämlich eine Reinigung und das Entfernen von Fußbodenbelagsresten, so dass die Fußböden schmutz- und staubfrei sind. Diese aufwändigen Vorbehandlungen machen es teilweise nötig, spezialisierte Unternehmen heranzuziehen, wodurch die standardisierten Sanierungsverfahren in der Regel relativ kosten- und zeitintensiv sind.

Ferner sind die im Rahmen der standardisierten Sanierungsverfahren eingesetzten Beschichtungsmaterialien zur Sanierung der Altfußböden in der Bereitstellung relativ kostenintensiv und weisen insbesondere relativ lange Trocknungszeiten auf, weshalb die standardisierten Sanierungsverfahren mit relativ langen Warte-/Trockenzeiten verbunden sind.

Insgesamt sind die standardisierten Sanierungsverfahren daher relativ kosten- und zeitintensiv, obwohl es wünschenswert wäre, die Sanierung von Altfußböden mit Blick auf die Kosten und den Sanierungszeitraum günstiger zu gestalten.

Die Aufgabe der vorliegenden Erfindung besteht daher darin, ein verbessertes Sanierungsverfahren vorzuschlagen.

Ferner sind auch das Bereitstellen eines Zwischenmischmaterials und eines Beschichtungsmaterials sowie das Bereitstellen eines Herstellverfahrens zur Herstellung eines solchen Beschichtungsmaterials weitere Aufgaben der vorliegenden Erfindung.

Bei der vorliegenden Erfindung werden diese Aufgaben insbesondere durch die Gegenstände der unabhängigen Ansprüche gelöst. Vorteilhafte Ausführungsformen sind Gegenstand der abhängigen Ansprüche und der Beschreibung.

Der Grundgedanke der Erfindung liegt darin, die bekannten standardisierten Sanierungsverfahren umfassend günstiger zu gestalten, indem ein einfacher handhabbares und relativ schnell trocknendes Beschichtungsmaterial und ein Sanierungsverfahren mit einem solchen Beschichtungsmaterial bereitgestellt werden.

Hierzu ist zunächst vorgesehen, ein Herstellverfahren zur Herstellung eines Beschichtungsmaterials anzugeben, wobei das Beschichtungsmaterial auch als Nivelliermasse bezeichnet sein kann, weil nämlich eine herausragende Eigenschaft des Beschichtungsmaterials darin liegt, im Altfußboden vorhandene Risse und/oder Löcher und/oder Unebenheiten auszugleichen.

Im Rahmen des vorgeschlagenen Herstellverfahrens für ein Beschichtungsmaterial ist vorgesehen, dass sich das Beschichtungsmaterial aus mehreren Ausgangsmaterialien zusammensetzt, nämlich aus einem Volumenfüllmaterial, insbesondere einer handelsüblichen Innenwandfarbe, einem Volumenzusatzmaterial, insbesondere einem handelsüblichen Polyurethan-Siegel (kurz PU-Siegel) oder einem handelsüblichen Polyurethan-Color-Siegel (kurz PU-Color-Siegel) und einem Aktivatormaterial, insbesondere ein handelsüblicher Vernetzer. Die verschiedenen Ausgangsmaterialien können dabei theoretisch in Pulverform oder bevorzugt in Flüssigform vorliegen.

Zur Herstellung des Beschichtungsmaterials ist im Rahmen einer ersten Bereitstellungsphase des Herstellverfahrens vorgesehen, dass zwei der beschriebenen Ausgangsmaterialien in einer Materialaufnahmeeinrichtung, insbesondere ein Behälter oder dergleichen, angeordnet und vermengt werden, nämlich das Volumenfüllmaterial und das Volumenzusatzmaterial. Dabei werden mehrere Arbeitsschritte der Reihe nach abgearbeitet, wobei zweckmäßigerweise zunächst das Volumenfüllmaterial und anschließend das Volumenzusatzmaterial in der Materialaufnahmeeinrichtung bereitgestellt werden oder umgekehrt.

Durch anschließendes Vermengen der beiden Materialien in der Materialaufnahmeeinrichtung, beispielsweise mit einem Rührwerkzeug, wird ein, vorzugsweise gleichmäßiges und homogenes, Zwischenmischmaterial bereitgestellt.

Dabei bezeichnen die Begriffe "homogen" und "homogene Gemische", dass ein Gemisch aus mehreren Bestandteilen besteht, wobei pro Volumeneinheit des homogenen Gemisches die gleiche Zusammensetzung und die gleichen physikalischen und chemischen Eigenschaften anzutreffen sind.

Ein Vorteil des bereitgestellten Zwischenmischmaterials ist, dass es über relativ lange Zeiträume aufbewahrt und beispielsweise zwischengelagert werden kann, bevor es der Endverwertung im Rahmen eines nachfolgend beschriebenen Sanierungsverfahrens zugeführt wird.

Natürlich kann das Zwischenmischmaterial auch ohne Zwischenlagerung direkt im Rahmen des Sanierungsverfahrens (=Endverwertung) oder in einer zweiten Bereitstellungsphase des Herstellverfahrens eingesetzt werden.

Im Rahmen der zweiten Bereitstellungsphase wird das Zwischenmaterial sozusagen finalisiert und für den Einsatz im Sanierungsverfahren (=Endverwertung) vorbereitet.

Hierbei wird zum Zwischenmaterial ein Aktivatormaterial hinzugefügt.

Durch anschließendes Vermengen des Zwischenmaterials mit dem Aktivatormaterial wird ein Vernetzungsprozess aktiviert. Dadurch wird ein, insbesondere homogenes, Beschichtungsmaterial bereitgestellt, dass wegen der oben beschriebenen Eigenschaften auch als Nivelliermasse bezeichnet wird. Das Beschichtungsmaterial ist bevorzugt von flüssiger, zäher Konsistenz, wie etwa Honig, so dass es relativ gut und selbsttätig in am Altfußboden vorhandene Spalte, Risse und Dellen fließen kann, um diese zu verschließen.

Insbesondere wird durch das Vermengen des Zwischenmaterials mit dem Aktivatormaterial eine chemische Reaktion zwischen dem Zwischenmaterial und dem Aktivatormaterial aktiviert, so dass eine relativ zügige Aushärtung des Beschichtungsmaterials bewirkt ist. Exemplarisch ist das Beschichtungsmaterial innerhalb von 2 bis 3 Minuten nach dem Vermengen Bearbeitungsfest und nach 18 Stunden nach dem Vermengen Endfest.

Dadurch wird der Vorteil erreicht, dass das Beschichtungsmaterial nach relativ kurzer Trocknungszeit getrocknet oder ausgehärtet ist, so dass beispielsweise ein Sanierungsverfahren insgesamt weniger zeitintensiv ist.

Beispielsweise kann die Zeit zur Sanierung eines Fußbodens im Rahmen eines entsprechenden Sanierungsverfahrens mit dem beschriebenen Beschichtungsmaterial gegenüber den bekannten standardisierten Sanierungsverfahren halbiert werden.

Die Erfindung umfasst ferner den Grundgedanken, ein nach dem oben beschriebenen Verfahren hergestelltes Beschichtungsmaterial zur Verwendung in einem Sanierungsverfahren zum Beschichten einer sanierungsreifen Fußboden-Oberfläche eines Fußbodens bereitzustellen. Das Beschichtungsmaterial setzt sich dabei, insbesondere massenanteilsartig, aus 10 Kilogramm Volumenfüllmaterial, insbesondere einer handelsüblichen Innenwandfarbe, aus 2,5 Kilogramm Volumenzusatzmaterial, insbesondere ein handelsüblichen PU-Color-Siegel, und aus 500 Milliliter Aktivatormaterial, insbesondere ein handelsüblicher Vernetzer, zusammen.

Das Beschichtungsmaterial hat den Vorteil, dass es zur Wiederherstellung eines stark beschädigten Altfußbodens genutzt werden kann. Auch von Vorteil ist, dass das ausgehärtete Beschichtungsmaterial relativ elastisch und trotzdem schlag- und kratzfest ist. Ferner ist ein mit dem Beschichtungsmaterial wiederhergestellter Fußboden Wasser- und rutschfest und darüber hinaus belastbar bis 30 Tonnen/m².

Gemäß einem weiteren Grundgedanken der Erfindung setzt sich das Beschichtungsmaterial aus einem x-Fachen von 7,0; 7,5; 8,0; 8,5; 9,0; 9,5; 10,0; 10,5; 11,0; 11,5; 12,0 (jeweils in) Kilogramm Volumenfüllmaterial, insbesondere einer handelsüblichen Innenwandfarbe, aus einem x-Fachen von 1,5; 2,0; 2,5; 3,0; 3,5 (jeweils in) Kilogramm Volumenzusatzmaterial, insbesondere ein handelsüblichen PU-Color-Siegel, und aus einem x-Fachen von 100; 150; 200; 250; 300; 350; 400; 450; 500; 550; 600; 650; 700; 750; 800; 850; 900 (jeweils in) Milliliter Aktivatormaterial, insbesondere ein handelsüblicher Vernetzer, zusammen. Dabei ist x eine positive rationale Zahl, so dass das Beschichtungsmaterial in beliebigen Bruchteilen und Vielfachen bereitstellbar ist. Beispielsweise ist für x=1/3, 1/3 der Menge von Volumenfüllmaterial, 1/3 der Menge von Volumenzusatzmaterial und 1/3 der Menge von Aktivatormaterial zu verwenden. Das hat den Vorteil, dass stets dasselbe Verhältnis von Volumenfüllmaterial, Volumenzusatzmaterial und Aktivatormaterial verwendet ist.

Vorzugsweise setzt sich das Beschichtungsmaterial aus einem x-Fachen von 8,0; 8,5; 9,0; 9,5; 10,0; 10,5; 11,0 (jeweils in) Kilogramm Volumenfüllmaterial, insbesondere einer handelsüblichen Innenwandfarbe, aus einem x-Fachen von 2, 0; 2,5; 3,0 (jeweils in) Kilogramm Volumenzusatzmaterial, insbesondere ein handelsüblichen PU-Color-Siegel, und aus einem x-Fachen von 200; 250; 300; 350; 400; 450; 500; 550; 600; 650; 700; 750; 800 (jeweils in) Milliliter Aktivatormaterial, insbesondere ein handelsüblicher Vernetzer, zusammen.

Weiter vorzugsweise setzt sich das Beschichtungsmaterial aus einem x-Fachen von 9,5; 10,0; 10,5 (jeweils in) Kilogramm Volumenfüllmaterial, insbesondere einer handelsüblichen Innenwandfarbe, aus einem x-Fachen von 2,0; 2,5; 3,0 (jeweils in) Kilogramm Volumenzusatzmaterial, insbesondere ein handelsüblichen PU-Color-Siegel, und aus einem x-Fachen von 400; 450; 500; 550; 600 (jeweils in) Milliliter Aktivatormaterial, insbesondere ein handelsüblicher Vernetzer, zusammen.

Gemäß einem weiteren Grundgedanken der Erfindung setzt sich das Beschichtungsmaterial aus 77 Volumenanteile in %, insbesondere aus 60 bis 80 Volumenanteile in %, Volumenfüllmaterial, insbesondere einer handelsüblichen Innenwandfarbe, aus 19 Volumenanteile in %, insbesondere aus 10 bis 30 Volumenanteile in %, Volumenzusatzmaterial, insbesondere ein handelsüblicher Polyurethan-Siegel, und aus 4 Volumenanteile in %, insbesondere aus 1 bis 10 Volumenanteile in %, Aktivatormaterial, insbesondere ein handelsüblicher Vernetzer, zusammen. Insbesondere können sich die %-Angaben jeweils auf das Volumen oder das Gewicht der verschiedenen Materialien beziehen.

Vorzugsweise setzt sich das Beschichtungsmaterial aus 70 bis 80 Volumenanteile in % Volumenfüllmaterial, insbesondere einer handelsüblichen Innenwandfarbe, aus 15 bis 25 Volumenanteile in %, Volumenzusatzmaterial, insbesondere ein handelsüblicher Polyurethan-Siegel, und aus 2 bis 6 Volumenanteile in %, Aktivatormaterial, insbesondere ein handelsüblicher Vernetzer, zusammen.

Weiter vorzugsweise setzt sich das Beschichtungsmaterial aus 75 bis 79 Volumenanteile in % Volumenfüllmaterial, insbesondere einer handelsüblichen Innenwandfarbe, aus 17 bis 21 Volumenanteile in %, Volumenzusatzmaterial, insbesondere ein handelsüblicher Polyurethan-Siegel, und aus 3 bis 5 Volumenanteile in %, Aktivatormaterial, insbesondere ein handelsüblicher Vernetzer, zusammen.

Das Volumenfüllmaterial oder die handelsübliche Innenwandfarbe umfasst dabei zweckmäßigerweise: Bindemittel (Kunststoff-Dispersion) und/oder Pigmente und/oder Füllstoffe und/oder Wasser und/oder Additive und/oder Benzisothiazolinon, insbesondere 1,2 Benzisothiazol-3(2H)-on und 2-Methyl-2H-Isothiazol-3-on und/oder Methylisothiazolinon und/oder Zinkpyrithion. Hierbei kann praktischerweise folgende massenanteilsartige Zusammensetzung gewählt werden: 60% - 90% Bindemittel (Kunststoff-Dispersion) und/oder 30% - 10% Pigmente und/oder 30% - 10% Füllstoffe und/oder 30% - 10% Wasser und/oder 30% - 10% Additive und/oder 5% - 0,1% Benzisothiazolinon, insbesondere 5% - 0,1%1,2 Benzisothiazol-3(2H)-on und 5% - 0,1%2-Methyl-2H-Isothiazol-3-on und/oder 5% - 0,1% Methylisothiazolinon und/oder 5% - 0,1% Zinkpyrithion und Reste wie Wasser und/oder Lösemittel.

Das Volumenzusatzmaterial oder der handelsübliche PU-Color-Siegel umfasst dabei folgendes: 2K-Polyurethansiegel; Wasser und/oder Polyacrylat und/oder Polyurethan und/oder Glycolether und/oder Kieselsäure und/oder Wachse und/oder Additive, insbesondere 1,2 Benzisothiazol-3(2H)-on und Reste wie Wasser und/oder Lösemittel. Hierbei kann praktischerweise folgende massenanteilsartige Zusammensetzung gewählt werden: 30% - 60% Wasser und/oder 30% - 60% Polyacrylat und/oder 30% - 60% Polyurethan und/oder 10% - 30% Glycolether und/oder 10% - 30% Kieselsäure und/oder 10% - 30% Wachse und/oder 10% - 30% Additive, insbesondere 10% - 30% 1,2 Benzisothiazol-3(2H)-on und Reste wie Wasser und/oder Lösemittel.

Das Aktivatormaterial oder der handelsübliche Vernetzer umfasst ein hydrophiler, aliphatischer Polyisocyanat Dipropylenglykoldimethylether. Hierbei kann praktischerweise folgende massenanteilsartige Zusammensetzung gewählt werden: 20% - 60% hydrophiler, aliphatischer Polyisocyanat Dipropylenglykoldimethylether und Reste Lösemittel und/oder Wasser.

Natürlich können dem Beschichtungsmaterial weitere Stoffe oder Materialen beigemengt sein, beispielsweise Farbstoffe oder Farbpigmente, Wasser, Verfestiger, Dickmacher oder dergleichen.

Der Erfindung basiert ferner auf dem Grundgedanken, das Zwischenmischmaterial, wobei es sich insbesondere um eine Pre-Nivelliermasse handelt, bereitzustellen, so dass es zur Verwendung in einem Sanierungsverfahren genutzt werden kann. Das Zwischenmischmaterial setzt sich dabei insbesondere aus einem x-Fachen von 10 Kilogramm, insbesondere einem x-Fachen von 7,0; 7,5; 8,0; 8,5; 9,0; 9,5; 10,0; 10,5; 11,0; 11,5; 12,0 (jeweils) Kilogramm, Volumenfüllmaterial, insbesondere einer handelsüblichen Innenwandfarbe, und einem x-Fachen von 2,5 Kilogramm, insbesondere einem x-Fachen von 1,5; 2,0; 2,5; 3,0; 3,5 (jeweils) Kilogramm, Volumenzusatzmaterial, insbesondere einem handelsüblichen PU-Color-Siegel, zusammen. Dabei ist x auch hier eine positive rationale Zahl, so dass das Zwischenmischmaterial in beliebigen Bruchteilen und Vielfachen bereitstellbar ist. Beispielsweise ist für x=1/3, 1/3 der Menge von Volumenfüllmaterial, 1/3 der Menge von Volumenzusatzmaterial zu verwenden. Das hat den Vorteil, dass stets dasselbe Verhältnis von Volumenfüllmaterial und Volumenzusatzmaterial verwendet ist.

Vorzugsweise setzt sich das Zwischenmischmaterial aus einem x-Fachen von 8,0; 8,5; 9,0; 9,5; 10,0; 10,5; 11,0 (jeweils in) Kilogramm Volumenfüllmaterial, insbesondere einer handelsüblichen Innenwandfarbe, aus einem x-Fachen von 2,0; 2,5; 3,0 (jeweils in) Kilogramm Volumenzusatzmaterial, insbesondere ein handelsüblichen PU-Color-Siegel zusammen.

Weiter vorzugsweise setzt sich das Zwischenmischmaterial aus einem x-Fachen von 9,5; 10,0; 10,5 (jeweils in) Kilogramm Volumenfüllmaterial, insbesondere einer handelsüblichen Innenwandfarbe, aus einem x-Fachen von 2,0; 2,5; 3,0 (jeweils in) Kilogramm Volumenzusatzmaterial zusammen.

Das Zwischenmischmaterial kann sich auch aus 80 Volumenanteile in %, insbesondere 60 bis 90 Volumenanteile in %, Volumenfüllmaterial, insbesondere einer handelsüblichen Innenwandfarbe, und 20%, insbesondere 10 bis 40 Volumenanteile in %, Volumenzusatzmaterial, insbesondere einem handelsüblichen PU-Color-Siegel, zusammensetzen. Die %-Angaben können sich jeweils auf das Volumen oder das Gewicht der verschiedenen Materialien beziehen.

Vorzugsweise setzt sich das Zwischenmischmaterial aus 70 bis 85 Volumenanteile in % Volumenfüllmaterial, insbesondere einer handelsüblichen Innenwandfarbe, aus 15 bis 35 Volumenanteile in % Volumenzusatzmaterial, insbesondere ein handelsüblicher Polyurethan-Siegel, zusammen.

Weiter vorzugsweise setzt sich das Zwischenmischmaterial aus 77 bis 83 Volumenanteile in % Volumenfüllmaterial, insbesondere einer handelsüblichen Innenwandfarbe, aus 17 bis 23 Volumenanteile in %, Volumenzusatzmaterial, insbesondere ein handelsüblicher Polyurethan-Siegel zusammen.

Das Volumenfüllmaterial oder die handelsübliche Innenwandfarbe umfasst dabei zweckmäßigerweise: Bindemittel (Kunststoff-Dispersion) und/oder Pigmente und/oder Füllstoffe und/oder Wasser und/oder Additive und/oder Benzisothiazolinon, insbesondere 1,2 Benzisothiazol-3(2H)-on und 2-Methyl-2H-Isothiazol-3-on und/oder Methylisothiazolinon und/oder Zinkpyrithion und Reste wie Wasser und/oder Lösemittel. Hierbei kann praktischerweise folgende massenanteilsartige Zusammensetzung gewählt werden: 60% - 90% Bindemittel (Kunststoff-Dispersion) und/oder 30% - 10% Pigmente und/oder 30% - 10% Füllstoffe und/oder 30% - 10% Wasser und/oder 30% - 10% Additive und/oder 5% - 0,1% Benzisothiazolinon, insbesondere 5% - 0,1%1,2 Benzisothiazol-3(2H)-on und 5% - 0,1%2-Methyl-2H-Isothiazol-3-on und/oder 5% - 0,1% Methylisothiazolinon und/oder 5% - 0,1% Zinkpyrithion und Reste wie Wasser oder Lösemittel.

Das Volumenzusatzmaterial oder der handelsübliche PU-Color-Siegel umfassen dabei zweckmäßigerweise: 2K-Polyurethansiegel; Wasser und/oder Polyacrylat und/oder Polyurethan und/oder Glycolether und/oder Kieselsäure und/oder Wachse und/oder Additive, insbesondere 1,2 Benzisothiazol-3(2H)-on und Reste wie Wasser und/oder Lösemittel. Hierbei kann praktischerweise folgende massenanteilsartige Zusammensetzung gewählt werden: 30% - 60% Wasser und/oder 30% - 60% Polyacrylat und/oder 30% - 60% Polyurethan und/oder 10% - 30% Glycolether und/oder 10% - 30% Kieselsäure und/oder 10% - 30% Wachse und/oder 10% - 30% Additive, insbesondere 10% - 30% 1,2 Benzisothiazol-3(2H)-on und Reste wie Wasser und/oder Lösemittel.

Natürlich können dem Zwischenmischmaterial weitere Stoffe oder Materialen beigemengt sein, beispielsweise Farbstoffe, Wasser, Verfestiger, Dickmacher oder dergleichen.

Eine an sich von der vorstehenden Erfindung getrennte Erfindung umfasst den innovativen Gedanken, eine Haft-Grundierung bereitzustellen, die insbesondere im Rahmen des hier beschriebenen Sanierungsverfahrens, insbesondere zusammen mit dem Beschichtungsmaterial, eingesetzt werden kann.

Die Haft-Grundierung, insbesondere ein Haft-Grundiermaterial, hat dabei den Zweck, die Haftung, sozusagen die adhäsionsbedingte Oberflächenhaftung, zwischen zwei Materialien, insbesondere Beschichtungsmaterialien für Fußböden, zu verbessern.

Die Haft-Grundierung kann, beispielsweise im Rahmen eines Sanierungsverfahrens, direkt auf eine sanierungsreife Fußboden-Oberfläche eines Fußbodens aufgebracht werden. Nach einer Trocknungs-/Aushärtephase der Haft-Grundierung kann eine Schicht von Beschichtungsmaterial oder Nivelliermasse auf der Haft-Grundierung angeordnet werden. Das hat den Effekt, dass die Haftung der Schicht von Beschichtungsmaterial oder der Nivelliermasse und dem Fußboden verbessert ist, weil die Haft-Grundierung beispielsweise relativ klebrig ist und eine relativ hohe Bindungsfähigkeit aufweist.

Ferner kann die Haft-Grundierung, beispielsweise im Rahmen eines Sanierungsverfahrens, auf eine bestehende Deckoberfläche eines Fußbodens oder eine Schicht von ausgehärtetem/getrocknetem Beschichtungsmaterial oder Nivelliermasse aufgebracht sein. Nach einer Trocknungs-/Aushärtephase der Haft-Grundierung kann eine Deckschicht oder eine Versiegelung aufgebracht werden, beispielsweise eine PU-Versiegelung. Auch hier hat das den Effekt, dass die Haftung der Deckschicht oder der Versiegelung an dem darunterliegenden Fußboden verbessert ist, weil die Haft-Grundierung beispielsweise relativ klebrig ist und eine relativ hohe Bindungsfähigkeit aufweist.

Ferner hat die Haft-Grundierung die überraschende Eigenschaft, insbesondere während der Trocknungs-/Aushärtephase, keine (Gas-) Blasen zu werfen. Damit kann verhindert werden, dass ein die optischen und haptischen Eigenschaften des sanierten Fußbodens störender Blasen-Effekt auftritt.

Es ist vorgesehen, dass sich die Haft-Grundierung aus einem x-Fachen von 1 Kilogramm, insbesondere einem x-Fachen von 0,5; 0,6; 0,7; 0,8; 0,9; 1,0; 1,1; 1,2; 1,3; 1,4; 1,5 (jeweils in) Kilogramm Volumenfüllmaterial, insbesondere einer handelsüblichen Innenwandfarbe, einem x-Fachen von 1 Kilogramm, insbesondere einem x-Fachen von 0,5; 0,6; 0,7; 0,8; 0,9; 1,0; 1,1; 1,2; 1,3; 1,4; 1,5 (jeweils in) Kilogramm, Volumenzusatzmaterial, insbesondere ein handelsüblicher PU-Color-Siegel, und einem x-Fachen von 10 Kilogramm, insbesondere 8,0; 8,5; 9,0; 9,5; 10,0; 10,5; 11,0; 11,5; 12 (jeweils in) Kilogramm, Haftmaterial, insbesondere ein handelsüblicher Tiefengrund, zusammensetzt. Dabei ist x eine positive rationale Zahl, so dass die Haft-Grundierung in beliebigen Bruchteilen und Vielfachen bereitstellbar ist. Beispielsweise ist für x=1/3, 1/3 der Menge von Volumenfüllmaterial, 1/3 der Menge von Volumenzusatzmaterial und 1/3 der Menge von Haftmaterial zu verwenden. Das hat den Vorteil, dass stets dasselbe Verhältnis der Materialien verwendet ist.

Vorzugsweise setzt sich die Haft-Grundierung aus einem x-Fachen von 0,6; 0,7; 0,8; 0,9; 1,0; 1,1; 1,2; 1,3; 1,4 (jeweils in) Kilogramm Volumenfüllmaterial, insbesondere einer handelsüblichen Innenwandfarbe, einem x-Fachen von 0,6; 0,7; 0,8; 0,9; 1,0; 1,1; 1,2; 1,3; 1,4 (jeweils in) Kilogramm, Volumenzusatzmaterial, insbesondere ein handelsüblicher PU-Color-Siegel, und einem x-Fachen von 9,0; 9,5; 10,0; 10,5; 11,0 (jeweils in) Kilogramm Haftmaterial, insbesondere ein handelsüblicher Tiefengrund, zusammen.

Weiter vorzugsweise setzt sich die Haft-Grundierung aus einem x-Fachen von 0,8; 0,9; 1,0; 1,1; 1,2 (jeweils in) Kilogramm Volumenfüllmaterial, insbesondere einer handelsüblichen Innenwandfarbe, einem x-Fachen von 0,8; 0,9; 1,0; 1,1; 1,2 (jeweils in) Kilogramm, Volumenzusatzmaterial, insbesondere ein handelsüblicher PU-Color-Siegel, und einem x-Fachen von 9,5; 10,0; 10,5 (jeweils in) Kilogramm Haftmaterial, insbesondere ein handelsüblicher Tiefengrund, zusammen.

Weiter vorzugsweise setzt sich die Haft-Grundierung aus einem x-Fachen von 0,9; 1,0; 1,1 (jeweils in) Kilogramm Volumenfüllmaterial, insbesondere einer handelsüblichen Innenwandfarbe, einem x-Fachen von 0,9; 1,0; 1,1 (jeweils in) Kilogramm, Volumenzusatzmaterial, insbesondere ein handelsüblicher PU-Color-Siegel, und einem x-Fachen von 9,5; 10,0; 10,5 (jeweils in) Kilogramm Haftmaterial, insbesondere ein handelsüblicher Tiefengrund, zusammen.

Das Volumenfüllmaterial oder die handelsübliche Innenwandfarbe umfassen zweckmäßigerweise: Bindemittel (Kunststoff-Dispersion) und/oder Pigmente und/oder Füllstoffe und/oder Wasser und/oder Additive und/oder Benzisothiazolinon, insbesondere 1,2 Benzisothiazol-3(2H)-on und 2-Methyl-2H-Isothiazol-3-on und/oder Methylisothiazolinon und/oder Zinkpyrithion und Reste wie Wasser oder Lösemittel. Hierbei kann praktischerweise folgende massenanteilsartige Zusammensetzung gewählt werden: 60% - 90% Bindemittel (Kunststoff-Dispersion) und/oder 30% - 10% Pigmente und/oder 30% - 10% Füllstoffe und/oder 30%-10% Wasser und/oder 30% - 10% Additive und/oder 5% - 0,1% Benzisothiazolinon, insbesondere 5% - 0,1%1,2 Benzisothiazol-3(2H)-on und 5% - 0,1%2-Methyl-2H-Isothiazol-3-on und/oder 5% - 0,1% Methylisothiazolinon und/oder 5% - 0,1% Zinkpyrithion und Reste wie Wasser oder Lösemittel.

Das Volumenzusatzmaterial oder der handelsübliche PU-Color-Siegel umfassen dabei: 2K-Polyurethansiegel; Wasser und/oder Polyacrylat und/oder Polyurethan und/oder Glycolether und/oder Kieselsäure und/oder Wachse und/oder Additive, insbesondere 1,2 Benzisothiazol-3(2H)-on und Reste wie Wasser oder Lösemittel. Hierbei kann praktischerweise folgende massenanteilsartige Zusammensetzung gewählt werden: 30% - 60% Wasser und/oder 30% - 60% Polyacrylat und/oder 30% - 60% Polyurethan und/oder 10% - 30% Glycolether und/oder 10% - 30% Kieselsäure und/oder 10% - 30% Wachse und/oder 10% - 30% Additive, insbesondere 10% - 30% 1,2 Benzisothiazol-3(2H)-on und Reste wie Wasser oder Lösemittel.

Das Haftmaterial, insbesondere der handelsübliche Tiefengrund, umfasst dabei folgende Stoffe: Bindemittel (Kunststoff-Dispersion), Pigmente, Füllstoffe, Wasser, Additive, Methylisothiazolinon, Benzisothiazolinon, Zinkpyrithion. Hierbei kann praktischerweise folgende massenanteilsartige Zusammensetzung gewählt werden: 60% - 90% Bindemittel (Kunststoff-Dispersion) und/oder 30% - 10% Pigmente und/oder 30% - 10% Füllstoffe und/oder 30% - 10% Wasser und/oder 30% - 10% Additive und/oder 5% - 0,1% Benzisothiazolinon und/oder 5% - 0,1% Methylisothiazolinon und/oder 5% - 0,1% Zinkpyrithion sowie Reste wie Wasser oder Lösemittel.

Eine an sich ebenfalls von der vorstehenden Erfindung getrennte Erfindung umfasst den innovativen Gedanken, ein Herstellverfahren für eine Haft-Grundierung bereitzustellen. Im Rahmen des Herstellverfahrens zum Herstellen der Haft-Grundierung, insbesondere einem Haft-Grundiermaterial, sind die Verwendung eines Volumenfüllmaterials, eines Volumenzusatzmaterials und eines handelsüblichen Tiefengrunds vorgesehen. Diese Materialien werden in einer Materialaufnahmeeinrichtung bereitgestellt und gemäß folgendem Ablauf gemischt:
1) Bereitstellen des Volumenfüllmaterials in der Materialaufnahmeeinrichtung;
2) Hinzufügen des Volumenzusatzmaterials zum in der Materialaufnahmeeinrichtung bereitgestellten Volumenfüllmaterial;
3) Hinzufügen des handelsüblichen Tiefengrunds zum in der Materialaufbewahrungseinrichtung bereitgestellten Volumenzusatzmaterials und Volumenfüllmaterials;
4) Vermengen der in der Materialaufnahmeeinrichtung aufgenommenen Materialien, bis eine Haft-Grundierung bereitgestellt ist.

Die Erfindung umfasst ferner den weiteren Grundgedanken, ein Sanierungsverfahren zum Sanieren eines zu sanierenden Fußbodens bereitzustellen.

Im Rahmen des Sanierungsverfahrens wird auf eine zu sanierende Fußboden-Oberfläche eines Fußbodens, sozusagen auf einen Altfußboden, das beschriebene Beschichtungsmaterial aufgebracht. Im Rahmen des Sanierungsverfahrens sind mehrere Schritte vorgesehen.

Zunächst ist der Altfußboden, insbesondere dessen Fußboden-Oberfläche, gründlich zu reinigen, so dass der Altfußboden schmutzfrei ist. Beispielsweise können hier chemische Reiniger eingesetzt werden.

Um die Aufnahmefähigkeit und Haftfähigkeit des Altfußbodens nach der Reinigung zu verbessern, beispielsweise für das Beschichtungsmaterial, wird im Rahmen eines optionalen Schritts (zwischen dem Reinigungsschritt und dem Aufbringen des Beschichtungsmaterials) eine Haft-Grundierung oder eine andere Grundierung auf die zu sanierende, gereinigte Fußboden-Oberfläche aufgebracht. Die Haft-Grundierung oder eine andere Grundierung wird dabei zweckmäßigerweise aufgegossen. Nach dem Aufbringen der Haft-Grundierung oder der anderen Grundierung ist eine gewisse Zeit zur Trocknung/Aushärtung vorzusehen, beispielsweise 1 Stunde.

Denkbar ist, dass das Beschichtungsmaterial ohne Vorbehandlung des Altfußbodens aufgebracht wird.

Anschließend wird ein nach dem hier beschriebenen Herstellungsverfahren hergestelltes Beschichtungsmaterial auf den Altfußboden aufgebracht. Das Beschichtungsmaterial wird dabei insbesondere in Schichtdicken von 1 mm bis 2 mm gelichmäßig auf den Altfußboden aufgebracht, zweckmäßigerweise aufgegossen. Es schließt sich dann eine relativ kurze Trocknungs-/Aushärtephase an, in der eine chemische Reaktion zwischen dem Zwischenmaterial und dem Aktivatormaterial erfolgt. Die Trocknungs-/Aushärtephase kann beispielsweise 2 bis 3 Minuten nach dem Vermengen benötigen, anschließend ist eine für eine weitere Bearbeitung ausreichende Härte der Schicht von Beschichtungsmaterial gegeben. Zweckmäßigerweise nimmt die vollständige Trocknung der Schicht von Beschichtungsmaterial bis zu 18 Stunden nach dem Vermengen in Anspruch.

Anschließend kann auf die, insbesondere 2 bis 3 Minuten, vorgetrocknete Schicht von Beschichtungsmaterial im Rahmen eines optionalen Schritts eine weitere Schicht angeordnet werden, nämlich entweder eine mehrere Millimeter starke Schicht von Beschichtungsmaterial, exemplarisch 1 mm bis 10 mm, oder eine Schicht von Haft-Grundierung oder eine Schicht eines Volumenzusatzmaterials, wie beispielsweise PU-Color-Versiegelung, oder eine Deckschicht. Durch die zusätzliche Schicht von Beschichtungsmaterial können relativ große und/oder tiefe Risse und Schäden in den Altfußböden ausgeglichen werden, so dass im Ergebnis auch stark verwitterte Fußböden saniert werden können. Bei der PU- Color-Versiegelung handelt es sich zweckmäßigerweise um eine Konservierungsschicht, die den darunterliegenden Fußboden vor Beschädigungen schützen sollen. Beispielsweise kann die Deckschicht die optischen und/oder haptischen Eigenschaften der Beschichtungsmaterial-Oberfläche verbessern, wodurch auch optische und haptische kundenseitige Anforderungen berücksichtigt werden können.

Optional können auf die Haft-Grundierung oder die zweite Schicht von Beschichtungsmaterial oder die PU-Color-Schicht eine Deckschicht aufgebracht werden, mittels der insbesondere optische und haptische Eigenschaften der Beschichtungsmaterial-Oberfläche wunschgemäß verbessert werden. Die Deckschicht kann beispielsweise aus RAL-Farben bestehen oder diese umfassen.

Anschließend kann weiter optional eine Behandlung des getrockneten/ ausgehärteten Beschichtungsmaterials oder der Haft-Grundierung oder der PU-Color-Versiegelung oder der Deckschicht vorgenommen werden. Beispielsweise kann dies im Rahmen eines Schleifverfahrens, vorzugsweises einer Feinschleifung und/oder einem Polieren der entsprechenden Oberflächenschicht erfolgen.

Das Sanierungsverfahren ist so gestaltet, dass das Aufbringen des Beschichtungsmaterials auf eine Fußboden-Oberfläche eines Fußbodens beispielsweise im Rahmen eines Gießprozesses realisiert wird. Das hat den Vorteil, dass das schnell trocknende/aushärtende Beschichtungsmaterial zügig und ohne unnötige Zeitverluste auf die zu beschichtende Fußboden-Oberfläche aufgetragen werden kann.

Grundsätzlich ist das hier beschriebene Sanierungsverfahren für ebene und horizontale Fußböden geeignet. Im Rahmen von Versuchen hat sich allerdings auch gezeigt, dass das Sanierungsverfahren mit dem Beschichtungsmaterial auch auf geneigten Fußböden oder auf schrägen Fußboden angewendet werden kann. Bedient man sich zum Aufbringen des Beschichtungsmaterials nicht eines Geißverfahrens, sondern beispielsweise eines Spachtelverfahrens, ist es sogar möglich, vertikale Wandflächen oder Deckenflächen zu sanieren.

Das Sanierungsverfahren hat den Vorteil, dass der wiederhergestellte Fußboden relativ elastisch und schlagfest und kratzfest ist. Ferner ist der wiederhergestellte Fußboden Wasser- und rutschfest und darüber hinaus belastbar bis 30 Tonnen/m².

Die Erfindung umfasst ferner den Grundgedanken, einen Fußboden bereitzustellen, der durch das beschriebene Sanierungsverfahren mit dem gemäß dem Herstellungsverfahren hergestellten Beschichtungsmaterial realisiert ist. Beispielsweise sind das Fußböden im Außenbereich eines Gebäudes, wie ein Garten-, Balkon-, Terrassenfußboden, und ein Fußboden im Innenbereich eines Gebäudes, wie ein Garagen-, Werkstatt-, Sanitär- und Wohnfußboden.

Hierzu ist vorgesehen, dass dem Beschichtungsmaterial Farbstoffe und/oder Farbpartikel beigemengt sind, um den Fußboden optisch und haptisch zu optimieren. Ferner kann auf dem Fußboden eine flächige Deckschicht angeordnet sein, insbesondere eine graphische Designschicht oder dergleichen.

Der Begriff "sanieren" oder "Sanierung" ist dahingehend auszulegen, dass bestehende, unter Umständen auch beschädigte, Altfußböden vollständig oder wenigstens teilweise wiederhergestellt werden.

Der Begriff "Fußboden" beschreibt den Teil des Bodens, der einem Gebäude zugeordnet und begehbar und/oder nutzbar ist, also insbesondere auch Fußböden im Außenbereich eines Gebäudes, wie Garten-/ Balkon-, Terrassenfußböden, und Fußböden im Innenbereich eines Gebäudes, wie Garagen-/ Werkstatt-/ Sanitär- und Wohnfußböden.

Zweckmäßigerweise ruht jeder Fußboden auf einem Bodenbett, insbesondere auf einer Etagendecke oder einer Bodengrundplatte.

Der Begriff "Massenanteil" bezeichnet im Sinne dieser Unterlagen eine Gehaltsgröße zum quantitativen Beschreiben der Zusammensetzung der vorliegenden Materialien, wie zum Beispiel dem Beschichtungsmaterial oder dem Zwischenmischmaterial. Gehaltsgrößen sind zum Beispiel gemäß DIN 1310 definiert.

Es ist bevorzugt, wenn es sich bei den beschriebenen Fußböden um Industrieböden, Werkstattböden, Sanitärböden, Böden in geschäftlich genutzten Bereichen und Wohnraumböden, wie beispielsweise Wohnzimmerböden, Flurböden oder Designböden handelt.

Mit Fußböden sind insbesondere die Fußböden im Außenbereich eines Gebäudes, wie Garten-, Balkon-, Terrassenfußböden, und Fußboden im Innenbereich eines Gebäudes, wie Garagen-, Werkstatt-, Sanitär- und Wohnfußböden gemeint.

Fußboden-Oberflächen von Fußböden sind dabei insbesondere die Oberflächen von Fußböden im Außenbereich eines Gebäudes, wie Garten-, Balkon-, Terrassenfußböden-Oberflächen und Fußboden-Oberflächen im Innenbereich eines Gebäudes, wie Garagen-, Werkstatt-, Sanitär- und Wohnfußböden-Oberflächen.

Es hat sich allerdings auch gezeigt, dass das Beschichtungsmaterial und das Sanierungsverfahren mit dem Beschichtungsmaterial für geneigte Fußböden oder für vertikale Wandflächen oder für Deckenfläche geeignet sind.

Innenwandfarben sind handelsüblich beispielsweise bei dem Unternehmen OBI GmbH & Co. Deutschland KG unter der Bezeichnung CMI® Wandfarbe erhältlich. PU-Color-Siegel sind handelsüblich beispielsweise bei dem Unternehmen Dr. Schutz GmbH unter der Bezeichnung PU Siegel® erhältlich. Tiefengrunde sind handelsüblich beispielsweise bei dem Unternehmen Dr. Schutz GmbH unter der Bezeichnung Dr. Schutz Super Bond® oder bei dem Unternehmen OBI GmbH & Co. Deutschland KG unter der Bezeichnung CMI® Tiefengrund erhältlich. Ferner sind Vernetzer handelsüblich beispielsweise bei dem Unternehmen Dr. Schutz GmbH unter der Bezeichnung Vernetzer erhältlich.

Zusammenfassend bleibt festzuhalten: Die vorliegende Erfindung betrifft ein Herstellverfahren zum Herstellen eines Zwischenmischmaterials und eines Beschichtungsmaterials zur Verwendung in einem Sanierungsverfahren, eine Masseanteil-Zusammensetzung des Zwischenmischmaterials und eine Masseanteil-Zusammensetzung des Beschichtungsmaterials zur Verwendung in einem Sanierungsverfahren sowie ein Sanierungsverfahren zum Sanieren einer Fußboden-Oberfläche, insbesondere einer Gebäudefläche oder einer Wandfläche oder einer Bodenfläche oder einer Deckenfläche, umfassend eine zu sanierende Fußboden-Oberfläche und ein Beschichtungsmaterial.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Teilschnittansicht eines Altfußbodens mit einer zu sanierenden Fußboden-Oberfläche,
- Fig. 2: eine Teilschnittansicht des Altfußbodens gemäß Fig. 1, nämlich im Rahmen des Sanierungsverfahrens beim Aufbringen einer ersten Materialschicht,
- Fig. 3: eine Teilschnittansicht des Altfußbodens gemäß Fig. 1, nämlich im Rahmen des Sanierungsverfahrens eine Behandlung einer ausgehärteten Materialschicht,
- Fig. 4: eine Teilschnittansicht des Altfußbodens gemäß Fig. 1, nämlich im Rahmen des Sanierungsverfahrens beim Aufbringen einer optische und/oder haptische Eigenschaften verbessernden Deckschicht auf eine Materialschicht,
- Fig. 5: eine Teilschnittansicht des Altfußbodens gemäß Fig. 1, allerdings nach abgeschlossenem Sanierungsverfahren,
- Fig. 6: eine Teilschnittansicht eines weiteren sanierten Altfußbodens,
- Fig. 7: ein Herstellverfahren zum Herstellen eines Beschichtungsmaterials in einem stark vereinfachten Blockdiagramm.

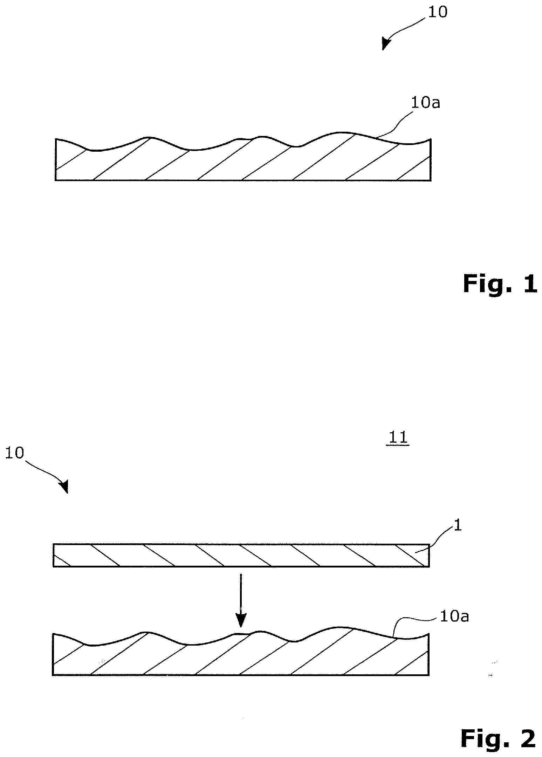

Die Figuren 1 bis 6 zeigen jeweils eine Teilschnittansicht eines im Ganzen mit dem Bezugszeichen 10 bezeichneten Fußbodens, bei dem es sich beispielsweise um einen beschädigten oder gealterten Fußboden 10 handelt, so dass man diesen auch ohne weiteres als Altfußboden 10 bezeichnen könnte.

Bei dem Fußboden 10 handelt es sich beispielsweise um einen Fußboden im Außenbereich eines Gebäudes, wie einen Garten-, Balkon-, Terrassenfußboden oder einen Fußboden im Innenbereich eines Gebäudes, wie einen Garagen-, Werkstatt-, Sanitär- und Wohnfußboden.

Gängig sind beispielsweise elastische und nicht elastische Fußböden 10, wie PVC-Fußböden 10, Linoleum-Fußböden 10, Steinfußböden 10 oder Betonfußböden 10.

Der Fußboden erfährt im Rahmen seiner vorhergesehenen Nutzung eine relativ starke Belastung, beispielsweise wenn er schwere Lasten oder relativ häufiges Begehen zu ertragen hat. Daraus resultiert eine relativ hohe Beanspruchung, die eine gewisse Abnutzung und/oder Beschädigung des Fußbodens 10 unvermeidlich macht.

Jedenfalls weist der Fußboden 10 eine Fußboden-Oberfläche 10a auf, die sozusagen als Deckschicht 15 oder als Funktionsschicht dient.

In den Fig. 1-6 ist die Fußboden-Oberfläche 10a des Fußbodens 10 leicht gewellt dargestellt, um beispielsweise kleinere Schäden, Dellen, Verfärbungen oder Risse anzudeuten, die die optischen und haptischen Eigenschaften des Fußbodens 10 relativ stark herabsetzen.

Zur Sanierung, also zur Wiederherstellung, des ursprünglichen Fußbodens 10 ist vorgesehen, dass die Fußboden-Oberfläche 10a zunächst gesäubert wird, so dass Schmutz und dergleichen von der zu sanierenden Fußboden-Oberfläche 10a des Altfußbodens 10 entfernt ist. Dadurch wird erreicht, dass das nachfolgend aufgetragene oder aufgebrachte Material besser an der Fußboden-Oberfläche 10a haftet. Im Rahmen dieses Schrittes kann vorgesehen sein, dass beispielsweise Reinigungsmittel oder eine Haft-Grundierung 13 oder dergleichen aufgetragen werden, um Schmutz effektiver von der Fußboden-Oberfläche 10a zu entfernen und um die Haftung zu verbessern.

Nach dem Säubern ist im Rahmen des Sanierungsverfahrens 11 vorgesehen, dass Beschichtungsmaterial 1, welches zuvor im Rahmen eines nachfolgend noch erläuterten Herstellungsverfahrens 2 bereitgestellt wird, auf die gesäuberte Fußboden-Oberfläche 10a aufgebracht wird. Zweckmäßig ist es, wenn das Beschichtungsmaterial 1 beispielsweise im Rahmen eines Gießprozesses auf die Fußboden-Oberfläche 10a des Fußbodens 10 aufgebracht wird. Man kann sich beispielsweise vorstellen, dass das Beschichtungsmaterial 1 hierzu in einem in der Zeichnung nicht dargestellten Gießapparat bereitgestellt wird, um mittels des Gießapparats auf die Fußboden-Oberfläche 10a des Fußbodens 10 aufgegossen zu werden.

Unabhängig davon, wie nun das Beschichtungsmaterial 1 auf die Fußboden-Oberfläche 10a des Fußbodens 10 gelangt, ist in einem nachfolgenden Schritt des Sanierungsverfahrens 11 vorgesehen, dass das aufgebrachte Beschichtungsmaterial 1 trocknet oder aushärtet, wozu man eine Trocknungszeit vorsehen muss.

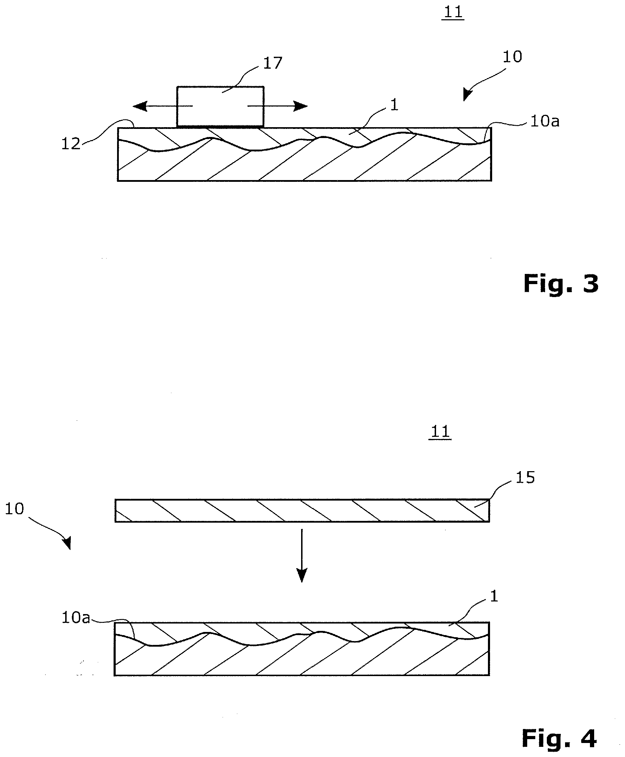

Nach dem das Beschichtungsmaterial 1 vollständig oder zumindest ansatzweise getrocknet oder ausgehärtet ist, kann die neu gebildete Beschichtungsmaterial-Oberfläche 12 des ausgehärteten Beschichtungsmaterials 1, wie sie beispielsweise gemäß Fig. 3 zu erkennen ist, sozusagen final behandelt werden.

Hierzu sind beispielsweise ein Feinschleifvorgang oder ein Poliervorgang vorstellbar, wobei in Fig. 3 exemplarisch durch ein Werkzeugkörper 17 ein Bearbeitungsvorgang angedeutet ist, beispielsweise ein Schleifvorgang. Jedenfalls kann hierdurch die Oberflächengüte der Beschichtungsmaterial-Oberfläche 12 des Beschichtungsmaterials 1 wunschgemäß oder kundengemäß angepasst werden.

Gemäß Fig. 4 ist zu erkennen, dass im Rahmen des Sanierungsverfahrens 11 eine weitere Schicht 15 auf die ausgehärtete Schicht von Beschichtungsmaterial 1 aufgebracht werden kann. Zum Aufbringen der Schicht 15 kann beispielsweise auf einen Gießprozess zurückgegriffen werden, beispielsweise so wie es vorstehend beschrieben ist.

Zweckmäßigerweise handelt es sich bei dieser Schicht um eine Deckschicht 15 und/oder um eine Funktionsschicht 15, die beide beispielsweise optische und/oder haptische Eigenschaften der Beschichtungsmaterial-Oberfläche 12 wunschgemäß verbessern. Beispielsweise handelt es sich bei der Deckschicht 15 um eine grafisch gestaltete Deckschicht 15 oder eine farbige Deckschicht 15. Für den Fall, dass es sich um eine Funktionsschicht 15 handelt, kann man sich beispielsweise vorstellen, dass elastisch dämpfende Eigenschaften in die Funktionsschicht 15 integriert sind, sozusagen in der Art einer Schaumstoffschicht.

Grundsätzlich kann im Rahmen des Sanierungsverfahrens 11 vorgesehen sein, dass neben den beschriebenen Schichten weitere Schichten vorgesehen sind.

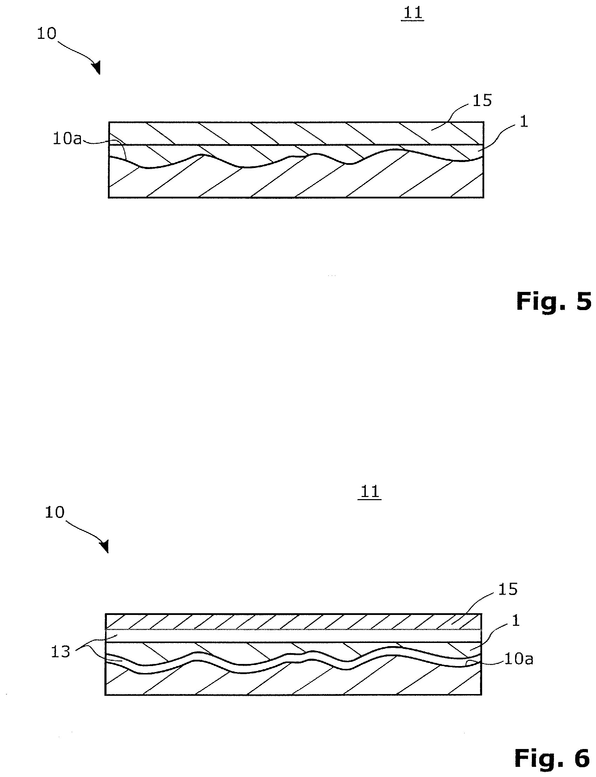

Gemäß Fig. 6 ist beispielsweise vorgesehen, dass nach dem Säubern des Altfußbodens 10 eine Haft-Grundierung 13 auf die Fußboden-Oberfläche10 aufgebracht ist, was in der Fig. 6 durch eine zusätzliche relativ dünne Schicht 13 angedeutet ist. Das Aufbringen der Haft-Grundierung 13 hat den Vorteil, dass die Haftung des Beschichtungsmaterials 1 auf dem Altfußboden 10 verbessert ist, so dass auch relativ stark verwitterte oder beschädigte Altfußböden 10 im Rahmen des Sanierungsverfahrens 11 wiederhergestellt werden können. Dadurch ist das Sanierungsverfahren11 relativ flexibel einsetzbar.

Ferner kann im Rahmen des Sanierungsverfahrens 11 vorgesehen sein, dass nach dem Aufbringen und Aushärten oder teilweise Aushärten des Beschichtungsmaterials 1 eine weitere Haft-Grundierung 13 aufgebracht wird. Dies hat den Vorteil, dass beispielsweise eine Deck- oder Funktionsschicht 15 relativ gut an dem wiederhergestellten Altfußboden 10 haften kann, was beispielsweise in der Fig. 6 relativ gut zu erkennen ist.

Jedenfalls kann im Rahmen des Sanierungsverfahrens 11 ferner vorgesehen sein, dass auf das auf den Altfußboden 10 aufgebrachte und ausgehärtete oder teilweise ausgehärtete Beschichtungsmaterial 10 oder auf eine auf das Beschichtungsmaterials 1 aufgebrachte Haft-Grundierung 13 ein Volumenzusatzmaterial 4, insbesondere eine PU-Color-Versiegelung oder dergleichen, aufgebracht wird. Dies hat den Vorteil, dass der wiederhergestellte Fußboden 10 vor zukünftigen Beschädigungen oder dergleichen besser geschützt ist.

Die den wiederhergestellten Fußboden 10 gegen die Umwelt abgrenzende Deck- oder Funktionsschicht 15 ist gemäß Fig. 6 exemplarisch als Deckschicht 15 gestaltet, die insbesondere optische und/oder haptische Eigenschaften des wiederhergestellten Fußbodens 10 verbessert.

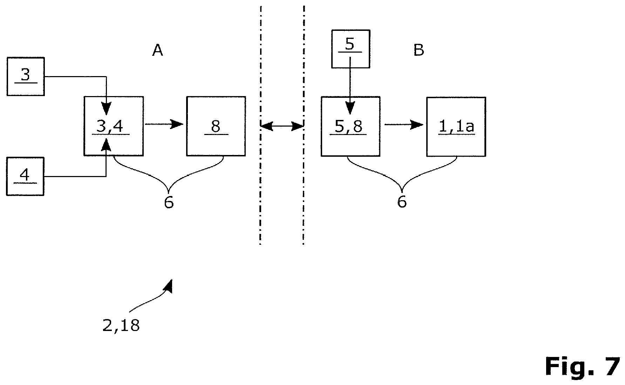

Zuletzt ist gemäß Fig. 7 exemplarisch ein Herstellverfahren 2 zum Herstellen eines Beschichtungsmaterials 1 in einem stark vereinfachten Blockdiagramm 18 angegeben.

Das im Ganzen mit dem Bezugszeichen 2 bezeichnete Herstellverfahren dient zum Herstellen des beschriebenen Beschichtungsmaterials 1, insbesondere einer Nivelliermasse 1a oder Pre-Nivelliermasse 1b, für den Einsatz in einem Sanierungsverfahren 11.

Das Herstellerverfahren 2 gliedert sich grundsätzlich in zwei unterschiedliche und voneinander, insbesondere zeitlich, getrennte Bereitstellungsphasen.

Gemäß einer mit dem Buchstaben A bezeichneten ersten Bereitstellungsphase ist vorgesehen, dass ein Volumenfüllmaterial 3 und ein Volumenzusatzmaterial 4 in einer Materialaufnahmeeinrichtung 6 bereitgestellt werden.

Beispielsweise werden das Volumenfüllmaterial 3 und das Volumenzusatzmaterial 4 in separaten Boxen aufbewahrt, was in der Fig. 7 exemplarisch durch rechteckige Kästchen dargestellt ist.

Anschließend werden die beiden Materialien 3, 4 in der Materialaufnahmeeinrichtung 6 miteinander vermengt oder miteinander vermischt, wodurch ein Zwischenmischmaterial 8 bereitgestellt ist. Das Zwischenmischmaterial ist sozusagen ein Zwischenprodukt, das beispielsweise über längere Zeiträume gelagert werden kann, ohne dass sich dessen chemische Zusammensetzung ändert. Das Zwischenprodukt bzw. das Zwischenmischmaterial 8 eignet sich daher beispielsweise im besonderen Maße für den Verkauf, beispielsweise im Einzel- oder Großhandel.

Jedenfalls kann das Zwischenmischmaterial 8 natürlich auch unverzüglich im Rahmen des Sanierungsverfahrens 11 angewendet werden.

Hierzu ist eine mit dem Buchstaben B bezeichnete zweite Bereitstellungsphase vorgesehen, im Rahmen der ein Aktivatormaterial 5 zu dem Zwischenmischmaterial 8 hinzugefügt wird. Das Zwischenmischmaterial 8 und das Aktivatormaterial 5 werden miteinander vermengt oder miteinander vermischt. Das Beschichtungsmaterial 1 kann nun im Rahmen des Sanierungsverfahrens 11 eingesetzt werden.

Das Beschichtungsmaterial 1 eignet sich dann zum Sanieren eines sanierungsreifen Fußboden-Oberfläche 10a eines Altfußbodens 10, wobei sich der Massenanteil des Beschichtungsmaterials 1 exemplarisch aus
- 75% Volumenfüllmaterial 3, insbesondere handelsübliche Innenwandfarbe 3a,
- 20% Volumenzusatzmaterial 4, insbesondere handelsüblicher Polyurethan-Siegel 4a,
- 5% Aktivatormaterial 5, insbesondere handelsübliche Vernetzer 5a, zusammensetzt.

## Patentansprüche

1. Herstellverfahren (2) zum Herstellen eines Beschichtungsmaterials (1), insbesondere einer Nivelliermasse (1a), mit einem Volumenfüllmaterial (3), mit einem Volumenzusatzmaterial (4), mit einem Aktivatormaterial (5) und mit einer Materialaufnahmeeinrichtung (6), umfassend eine erste Bereitstellungsphase (A) mit den Schritten:
1) Bereitstellen des Volumenfüllmaterials (3) in der Materialaufnahmeeinrichtung (6);
2) Bereitstellen des Volumenzusatzmaterials (4) in der Materialaufnahmeeinrichtung (6);
3) Vermengen der beiden in der Materialaufnahmeeinrichtung (6) aufgenommenen Materialien (3, 4) bis ein Zwischenmischmaterial (8) bereitgestellt ist;
4) Aufbewahren des Zwischenmischmaterials (8) bis zu einer Endverwertung im Rahmen eines Sanierungsverfahrens (11) oder sofortige Endverwertung im Rahmen des Sanierungsverfahrens (11),
ferner umfassend eine zweite Bereitstellungsphase (B) mit den Schritten:
5) Hinzufügen von Aktivatormaterial (5) zum in der Materialaufbewahrungseinrichtung (6) bereitgestellten Zwischenmischmaterial (8);
6) Vermengen der beiden Materialien (5, 8), so dass ein Beschichtungsmaterial (1) bereitgestellt ist.

2. Beschichtungsmaterial (1), insbesondere eine Nivelliermasse (1a), zum Beschichten einer sanierungsreifen Fußboden-Oberfläche (10a) eines Fußbodens (10), insbesondere hergestellt nach dem Verfahren gemäß Anspruch 1 und zweckmäßigerweise zur Verwendung in einem Sanierungsverfahren (11) gemäß einem der Ansprüche 7-12, wobei sich das Beschichtungsmaterial (1) zusammensetzt aus:
- 10 Kilogramm Volumenfüllmaterial (3), insbesondere eine handelsübliche Innenwandfarbe (3a),
- 2,5 Kilogramm Volumenzusatzmaterial (4), insbesondere ein handelsüblicher Polyurethan-Siegel (4a) oder ein handelsüblicher PU-Color-Siegel (4a),
- 500 Milliliter Aktivatormaterial (5), insbesondere ein handelsüblicher Vernetzer (5a).

3. Beschichtungsmaterial (1), insbesondere eine Nivelliermasse (1a), zum Beschichten einer sanierungsreifen Fußboden-Oberfläche (10a) eines Fußbodens (10), insbesondere hergestellt nach dem Verfahren gemäß Anspruch 1 und zweckmäßigerweise zur Verwendung in einem Sanierungsverfahren (11) gemäß einem der Ansprüche 7-12, wobei sich das Beschichtungsmaterial (1) zusammensetzt aus:
- einem x-Fachen von 8 bis 12 Kilogramm Volumenfüllmaterial (3), insbesondere eine handelsübliche Innenwandfarbe (3a),
- einem x-Fachen von 1,5 bis 3,5 Kilogramm Volumenzusatzmaterial (4), insbesondere ein handelsüblicher Polyurethan-Siegel (4a) oder ein handelsüblicher PU-Color-Siegel (4a),
- einem x-Fachen von 100 bis 900 Milliliter Aktivatormaterial (5), insbesondere einem handelsüblichen Vernetzer (5a),
- wobei x eine positive rationale Zahl ist, so dass das Beschichtungsmaterial (1) in beliebigen Bruchteilen und Vielfachen bereitstellbar ist.

4. Beschichtungsmaterial (1), insbesondere eine Nivelliermasse (1a), zum Beschichten einer sanierungsreifen Fußboden-Oberfläche (10a) eines Fußbodens (10), insbesondere hergestellt nach dem Verfahren gemäß Anspruch 1 und zweckmäßigerweise zur Verwendung in einem Sanierungsverfahren (11) gemäß einem der Ansprüche 7-12, wobei sich das Beschichtungsmaterial (1) zusammensetzt aus:
- 60 bis 80 Volumenanteile in % Volumenfüllmaterial (3), insbesondere eine handelsübliche Innenwandfarbe (3a),
- 10 bis 30 Volumenanteile in % Volumenzusatzmaterial (4), insbesondere ein handelsüblicher Polyurethan-Siegel (4a) oder einem handelsüblichen PU-Color-Siegel (4a),
- 1 bis 10 Volumenanteile in % Aktivatormaterial (5), insbesondere ein handelsüblicher Vernetzer (5a).

5. Zwischenmischmaterial (8), insbesondere Pre-Nivelliermasse (1b), insbesondere hergestellt nach dem Verfahren gemäß Anspruch 1 und zweckmäßigerweise zur Verwendung in einem Sanierungsverfahren (11) gemäß einem der Ansprüche 7-12, wobei sich das Zwischenmischmaterial (8) zusammensetzt aus:
- einem x-Fachen von 10 Kilogramm Volumenfüllmaterial (3), insbesondere eine handelsübliche Innenwandfarbe (3a),
- einem x-Fachen von 2,5 Kilogramm Volumenzusatzmaterial (4), insbesondere ein handelsüblicher PU-Color-Siegel (4a),
- wobei x eine positive rationale Zahl ist, so dass das Zwischenmischmaterial (8) in beliebigen Bruchteilen und Vielfachen bereitstellbar ist; oder
- mindestens 80 Volumenanteile in % Volumenfüllmaterial (3), insbesondere eine handelsübliche Innenwandfarbe (3a),
- mindestens 20 Volumenanteile in % Volumenzusatzmaterial (4), insbesondere ein handelsüblicher PU-Color-Siegel (4a).

6. Haft-Grundierung (13), insbesondere Haft-Grundiermaterial, zum Beschichten einer sanierungsreifen Fußboden-Oberfläche (10a) eines Fußbodens (10) oder zum Beschichten eines Beschichtungsmaterials (1) oder einer Nivelliermasse (1a), zur Verwendung in einem Sanierungsverfahren (11) gemäß einem der Ansprüche 7-12, wobei sich die Haft-Grundierung (13) zusammensetzt aus:
- einem x-Fachen von 0,5 bis 1,5 Kilogramm, insbesondere 1 Kilogramm, Volumenfüllmaterial (3), insbesondere eine handelsübliche Innenwandfarbe (3a),
- einem x-Fachen von 0,5 bis 1,5 Kilogramm, insbesondere 1 Kilogramm, Volumenzusatzmaterial (4), insbesondere ein handelsüblicher PU-Color-Siegel (4a),
- einem x-Fachen von 8 bis 12 Kilogramm, insbesondere 10 Kilogramm, Haftmaterial, insbesondere ein handelsüblicher Tiefengrund,
- wobei x eine positive rationale Zahl ist, so dass die Haft-Grundierung (13) in beliebigen Bruchteilen und Vielfachen bereitstellbar ist.

7. Sanierungsverfahren (11) zum Sanieren eines Fußbodens (10), mit einer zu sanierenden Fußboden-Oberfläche (10a) und mit einem Beschichtungsmaterial (1) nach einem der vorhergehenden Ansprüche, mit den Schritten:
1) Säubern der zu sanierenden Fußboden-Oberfläche (10a);
2) Aufbringen des Beschichtungsmaterials (1) auf die zu sanierende Fußboden-Oberfläche (10a);
3) Aushärten des Beschichtungsmaterials (1);
4) Behandlung des ausgehärteten Beschichtungsmaterials (1), nämlich Feinschleifung und/oder Polieren einer Beschichtungsmaterial-Oberfläche (12) des Beschichtungsmaterials (1).

8. Sanierungsverfahren (11) nach Anspruch 7, **dadurch gekennzeichnet, dass**
- zwischen den Schritten 1) und 2) ein zusätzlicher Schritt 1a) eingefügt ist, der das Aufbringen einer Haft-Grundierung (13) auf die zu sanierende Fußboden-Oberfläche (10a) vorsieht.

9. Sanierungsverfahren (11) nach Anspruch 7 oder 8, **dadurch gekennzeichnet, dass**
- zwischen den Schritten 3) und 4) ein zusätzlicher Schritt 3a) eingefügt ist, der das Aufbringen einer Haft-Grundierung (13) oder eines Volumenzusatzmaterials (4) auf die ausgehärtete Beschichtungsmaterial-Oberfläche (12) des Beschichtungsmaterials (1) vorsieht.

10. Sanierungsverfahren (11) nach einem der Ansprüche 7 bis 9, **dadurch gekennzeichnet, dass**
- zwischen den Schritten 3) und 4) oder im Falle des Anspruchs 9 den Schritten 3a) und 4) ein zusätzlicher Schritt 3b) eingefügt ist, der das Aufbringen weiteren Beschichtungsmaterials (1) und dessen Aushärtung vorsieht.

11. Sanierungsverfahren (11) nach einem der Ansprüche 7 bis 10, **dadurch gekennzeichnet,**
- **dass** auf die Beschichtungsmaterial-Oberfläche (12) oder auf eine an der Beschichtungsmaterial-Oberfläche (12) angeordnete Haft-Grundierung (13) eine Deckschicht (15) aufgebracht ist, die insbesondere optische und haptische Eigenschaften der Beschichtungsmaterial-Oberfläche (12) wunschgemäß verbessert.

12. Sanierungsverfahren (11) nach einem der vorhergehenden Ansprüche, **dadurch gekennzeichnet,**
- **dass** das Aufbringen des Beschichtungsmaterials (1) oder der Haft-Grundierung (13) auf eine Fußboden-Oberfläche (10a) eines Fußbodens (10) im Rahmen eines Gießprozesses vorgenommen wird.

13. Fußboden (10), insbesondere ein Fußboden (10) im Außenbereich eines Gebäudes, nämlich ein Garten-, Balkon- oder Terrassenfußboden oder ein Fußboden im Innenbereich eines Gebäudes, nämlich ein Garagen-, Werkstatt-, Sanitär- oder Wohnfußboden, der gemäß einem Sanierungsverfahren nach Anspruch 7 bis 12 saniert ist, wobei ein Beschichtungsmaterial (1) nach den Ansprüchen 1 bis 4 verwendet wird,
- wobei dem Beschichtungsmaterial (1) Farbstoffe und/oder Farbpartikel beigemengt sind, um den Fußboden (10) optisch und haptisch zu optimieren und/oder
- wobei auf dem Fußboden (10) eine flächige Deckschicht (15) angeordnet ist, insbesondere eine graphische Designschicht (15).
